## Europäisches Patentamt

## European Patent Office

## Office européen des brevets

(11) Publication number: **0 144 196**
**B1**

(12) **EUROPEAN PATENT SPECIFICATION**

(45) Date of publication of patent specification: **22.03.89**

(51) Int. Cl.⁴: **B 65 D 1/10, B 29 D 22/00**

(21) Application number: **84308092.0**

(22) Date of filing: **21.11.84**

(60) Divisional application **87106939 filed on 13.05.87.**

(54) **Blow-molded bottle-shaped container of biaxially oriented thermoplastic synthetic resin with wide port.**

(30) Priority: **22.11.83 JP 220241/83**
**22.11.83 JP 180526/83**
**22.11.83 JP 180527/83**
**15.12.83 JP 236890/83**
**15.12.83 JP 193131/83**
**28.12.83 JP 249915/83**
**06.02.84 JP 19694/84**

(43) Date of publication of application:
**12.06.85 Bulletin 85/24**

(45) Publication of the grant of the patent:
**22.03.89 Bulletin 89/12**

(84) Designated Contracting States:
**CH DE FR GB IT LI NL**

(56) References cited:
**EP-A-0 073 151**
**DE-A-3 016 489**
**GB-A-1 453 176**
**US-A-3 934 743**

(73) Proprietor: **Yoshino Kogyosho CO., LTD.**
**No. 2-6, Ojima 3-chome, Koto-ku**
**Tokyo 136 (JP)**

(72) Inventor: **Sigiura, Hiroaki**
**No. 2-6, Ojima 3-Chome**
**Koto-ku Tokyo (JP)**

(74) Representative: **Heath, Derek James et al**
**BROMHEAD & CO. 19 Buckingham Street**
**London WC2N 6EF (GB)**

Courier Press, Leamington Spa, England.

## Description

This invention relates to a blow-moulded bottle-shaped container of biaxially-oriented thermoplastic synthetic resin as defined in the preamble of claim 1. An example of this form of container is - disclosed in US-A-3 934 743.

As the physical properties of synthetic resin material and the moulding technique of using the synthetic resin material have advanced, bottle-shaped containers with a wide port closed by a caulked cap such as neocap made of aluminium have been moulded out of synthetic resin material.

Since these bottle-shaped containers with a wide port are used almost without exception for containing drinking liquids and foodstuffs such as jam, the filling of the bottle-shaped containers is effected by heating-filling and pressurizing-filling. As, therefore, the contents are introduced by heating or pressurizing in the bottle-shaped container and the container is sealed, the container body itself is required to have a sufficiently large mechanical strength. A bottle-shaped container with a wide port which has sufficiently high mechanical strength can be provided by a method of biaxially-orientation blow-moulding polyethylene terephthalate resin. However, the blow-moulded bottle-shaped container of biaxially-oriented resin is biaxially orientation-moulded only at the container body, which means that the neck edge portion to be associated with a caulked cap of the bottle-shaped container remains in the shape of the preformed primary injection-moulded parison. Therefore, it is required to mould the preformed primary injection-moulded parison in high dimensional accuracy and to provide it with sufficiently high mechanical rigidity.

In order to increase the mechanical rigidity of the neck edge portion, the thickness of the neck edge portion of the bottle-shaped container may be merely increased. However, it is very difficult to accurately hold the dimensional accuracy of the neck edge portion of the bottle-shaped container until the moulding of the bottle-shaped container is completed.

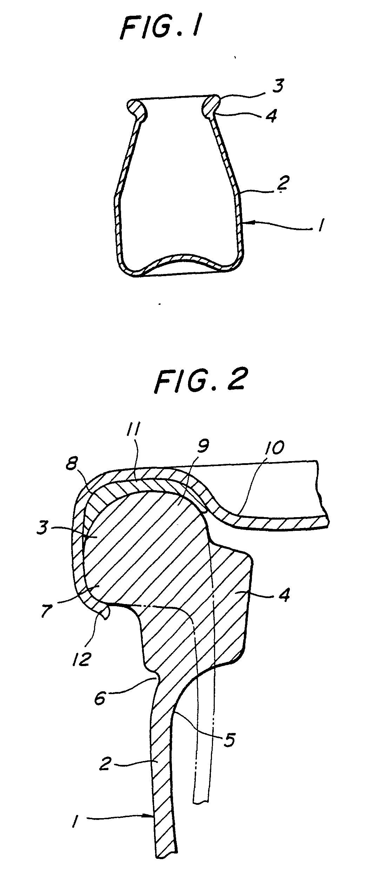

More particularly, a conventional bottle-shaped container with a wide port of synthetic resin has, as shown by the hatched lines in Figure 2 of the accompanying drawing, a container body 2 of reduced thickness which is integrally formed by biaxial blow-moulding directly from a thick neck edge portion 3. Therefore, it cannot accurately hold the dimensional accuracy of the surface of the neck edge portion 3 due to variation in the radius of curvature of the lower surface 7 of the neck edge portion 3 and in the radius of curvature of the rear upper surface 9 owing to the flowing phenomenon from the body side at the blow-moulding time and at the biaxial-orientation blow-moulding time of the preformed primary parison of the bottle-shaped container.

Further, when the body 2 is integrated directly with the neck edge portion 3 as described above, the pressure and the heat acting on the body 2 influences the neck edge portion 3 of the bottle-shaped container so as to cause the size of the radius of curvature of the above-described surface part of the neck edge portion 3 to vary, with the result that the dimensional accuracy of the neck edge portion 3 becomes unstable.

The radius of curvature of the surface part of the neck edge portion 3 has a very important influence on the association of a cap 10 with the neck edge portion 3 for sealing the bottle-shaped container 1, and the radius of curvature of the lower surface 7 of the neck edge portion 3 has a very important influence on the openability of the cap 10. Similarly, the upper surface, i.e., the radius of curvature of the front upper surface 8 and the radius of curvature of the rear upper surface 9 of the neck edge portion influences the sealability between the neck edge portion and the packing 11 of the cap 10. It is therefore necessary to hold accurately the radii of curvature of the front and rear upper surfaces of the neck edge portion to the set values at the time of moulding the preformed parison of primary injection-moulded shape.

However, since the values of the radii of curvature of the front and rear upper surfaces of the neck edge portion cannot be held in conventional blow-moulded bottle-shaped containers with a wide port of biaxially-oriented synthetic resin, opening of the cap 10 becomes difficult, or the closing retentivity of the bottle-shaped container 1 by the cap 10 becomes insufficient, or the sealing effect of the packing 11 associated with the cap 10 is not sufficient, with the result that the quality of the contents in the bottle-shaped container deteriorates disadvantageously or becomes variable.

Accordingly, it is an aim of the present invention to provide a blow-moulded bottle-shaped container of biaxially-oriented thermoplastic synthetic resin with a wide port which can eliminate the aforementioned drawbacks and disadvantages and prevent the dimensions of the surface of the neck edge portion from varying by reason of the pressure and heat acting on the container body by providing the container with a cylindrical neck portion having a sufficiently large thickness—to prevent the transmission of a stress and deforming force from the body to the neck edge portion— between the blow-moulded body of biaxially-oriented resin and the neck edge portion to be associated with a cap.

This aim is achieved by the characteristic features of the invention set forth in claim 1. Such a construction represents a substantial advance in the art over the kind of container shown in US-A-3 934 743.

An example of a container in accordance with the invention is shown in the accompanying drawing, in which:-

Figure 1 is a longitudinal sectional view through the bottle-shaped container; and

Figure 2 is an enlarged longitudinal sectional view of the essential part of the bottle-shaped containers shown in Figure 1.

The accompanying drawing shows a bottle-shaped container 1 with a wide port which is blow-moulded out of biaxially-oriented thermoplastic synthetic resin. It has a cylindrical neck portion 4 of thick short cylindrical shape between a neck edge portion 3, which is formed with a curved surface having a radius of curvature to give improved openability of a cap on the outer lower peripheral surface 7 and with a curved surface having a radius of curvature to give improved sealability to the packing 11 of a cap 10 on the upper surface, and a container body 2 of cylindrical shape and of reduced thickness which is formed by biaxial-orientation blow-moulding. The neck edge portion 3 is formed at the cylindrical neck portion 4 in an obliquely-outwardly, upwardly-projected state with the body 2 being integrated in the abruptly-bent and swelled state from the lower centre to the outward direction of the cylindrical neck portion 4.

More particularly, the moulding size of the neck edge portion 3 is capable of effectively preventing variations in dimensions due to the biaxial orientation blow-moulding of the body 2 or the thermally-filling or filling under pressure of liquid contents in the body 2 by having a lower surface 7 curved in a radius of curvature set so that a curved peripheral edge 12 of the cap 10 made of metal such as, for example, aluminium can be rigidly engaged. In addition, the neck edge portion 3 has a curved surface shape such that the packing 11 adhered to the cap 10 to obtain strong sealability between the cap 10 and the bottle-shaped container 1 can be more closely contacted. The cylindrical neck portion 4 also has thickness capable of providing a rigidity of the degree that a deforming stress effected at the time of biaxial orientation blow-moulding the body 2 and a deforming stress corresponding to a force from the exterior effected at the time of thermally-filling liquid contents or filling under pressure are not transmitted.

In the embodiment shown, the body 2 is bent outwardly from the portion near the outside edge of the lower end of the cylindrical neck portion 4, and a recess 6 is formed at the peripheral groove shape on the boundary portion of the outer peripheral surface between the cylindrical neck portion 4 and the body 2. The inner peripheral surface 5 of the upper end of the body as the connecting portion to the cylindrical neck portion 4 is curved in a large radius of curvature.

The structure of the connecting portion of the body 2 to the cylindrical neck portion 4, i.e., the upper end of the body, is very important, and becomes as described when the upper end of the body 2 is formed upon applying sufficient orientation thereto. More particularly, the body 2 — before the biaxial orientation blow-moulding — is disposed substantially from the centre on the lower surface of the cylindrical neck portion 4 in a depending state. When only the body 2 is oriented from this shape, the upper end of the body 2 is extremely strongly oriented and deformed to the cylindrical neck portion 4 which is not oriented nor deformed. Thus, even the body 2 in the vicinity of the cylindrical neck portion 4 can be sufficiently oriented.

When the upper end of the body 2 is oriented and deformed, a strong deforming force act on the cylindrical neck portion 4, but since the cylindrical neck portion 4 is moulded in a structure capable of sufficiently enduring against the external force as described above, the force from the body 2 side at the orientation moulding time is blocked by the cylindrical neck portion 4 and is not transmitted to the neck edge portion 3 at all. Similarly, when the container is thermally filled with liquid, a deforming force is created at the body 2 by this heating, but this force is not transmitted to the neck edge portion 3 by the cylindrical neck portion 4.

According to the present invention as described above, the neck portion of the bottle-shaped container with a wide port can block the transmission of all external forces to the neck edge portion from the body side of the bottle-shaped container, and the blocking action of transmitting the external forces operates irrespective of the time of moulding the bottle-shaped container, the time of filling it after the moulding stage, and the time of use. Therefore, the mechanical strength of the neck edge portion to be associated with the cap for opening and closing the bottle-shaped container can be sufficiently increased, and unnecessary external forces are reliably blocked to prevent the deformation of the neck edge portion. Consequently, the dimensional accuracy of the neck edge portion can be maintained in an extremely high state. When the dimensional accuracy of the neck edge portion is maintained in this way, high sealability and, preferably, easy openability of the cap can be achieved.

## Claims

1. A blow-moulded bottle-shaped container (1) of biaxially-oriented thermoplastic synthetic resin having a neck with a wide opening or mouth provided with an outwardly-protecting lip (3) to hold a cap (10) on the container, there being a neck portion (4) of increased thickness with respect to the thickness of the container body (2) between the lip (3) and the container body (2) which is of reduced thickness, and the internal surface of the neck portion (4) being cylindrical in shape with the upper end of the container body (2) bending and swelling outwardly from the lower part of the neck portion (4), the lip (3) being provided with a first curved surface on the outer lower peripheral surface thereof which is curved in a radius of curvature such that the edge of the cap can be rigidly engaged and with a second curved surface on the upper part thereof which is curved in a radius of curvature such that a packing between the cap and the container can be closely contacted, characterised in that the neck portion (4) has an inner surface which protrudes inwardly of the lip (3) and the container body (2), and that the lip (3) projects obliquely, in an outwardly and upwardly direction, from the inwardly-protruding neck portion (4).

2. A blow-moulded bottle-shaped container according to claim 1, characterised in that the inner surface of the neck portion (4) is slightly inclined upwardly and inwardly from its lower edge.

3. A blow-moulded bottle-shaped container according to claim 1 or claim 2, characterised in that a recess in the form of a peripheral groove (6) is provided on the outer surface of the container (1) at the junction between the neck portion (4) and the container body (2).

## Patentansprüche

1. Blasgeformter, flaschenartig Behälter (1) aus biaxial orientiertem thermoplastischen Kunstharz, der einen Hals mit einer großen Öffnung bzw. Mündung aufweist, die mit einem nach außen schützenden Rand (3) zum Halten einer Kapsel (10) auf dem Behälter versehen ist, wobei ein Halsabschnitt von vergrößerter Dicke in bezug auf die Dicke des Behälterkörpers (2) zwischen dem Rand (3) und dem Behälterkörper (2) von reduzierter Dicke angeordnet ist, und die Innenfläche des Halsabschnittes (4) zylindrisch ausgebildet ist, wobei das obere Ende des Behälterkörpers (2) sich von dem unteren Teil des Halsabschnittes (4) nach außen biegt und wölbt, der Rand (3) mit einer ersten gekrümmten Fläche auf dessen äußeren unteren Umfangsfläche versehen ist, die in einem Krümmungsradius gekrümmt ist, so daß die Kante der Kapsel starr verbunden werden kann, und mit einer zweiten gekrümmten Fläche auf dessen oberem Teil versehen ist, die mit einem Krümmungsradius gekrümmt ist, so daß eine Dichtung zwischen der Kapsel und dem Behälter eng angelegt werden kann, dadurch gekennzeichnet, daß der Halsabschnitt (4) eine Innenfläche aufweist, die nach innen vom Rand (3) und Behälterkörper (2) weg hervorragt, und· daß der Rand (3) kreuzweise, in eine nach außen und nach oben gerichtete Richtung, von dem nach innen hervorragenden Halsabschnitt (4) weg herausragt.

2. Blasgeformter, flaschenartig ausgebildeter Behälter nach Anspruch 1, dadurch gekennzeichnet, daß die Innenfläche des Halsabschnittes (4) leicht nach oben und nach innen von seiner unteren Kante aus geneigt ist.

3. Blasgeformter, flaschenförmig ausgebildeter Behälter nach Anspruch 1 oder 2, dadurch gekennzeichnet, daß eine Vertiefung in der Form einer Umfangsrinne (6) an der Außenfläche des Behälters (1) an dem Anschluß zwischen dem Halsabschnitt (4) und dem Behälterkörper (2) vorgesehen ist.

## Revendications

1. Récipient (1) en forme de bouteille moulé par soufflage en résine synthétique thermoplastique orientée biaxialement, comportant un col ayant une ouverture ou embouchure large munie d'une lèvre extérieure (3) de protection destinée à maintenir un couvercle (10) sur le récipient, une partie de col (4) d'épaisseur accrue par rapport à l'épaisseur du corps (2) du récipient étant située entre la lèvre (3) et le corps (2) du récipient qui est d'épaisseur réduite, et la surface intérieure de la partie de col (4) étant de forme cylindrique, l'extrémité supérieure du corps (2) du récipient se coudant et se renflant vers l'extérieur à partir de la portion inférieure de la partie de col (4), la lèvre (3) présentant une première surface incurvée sur sa surface périphérique inférieure extérieure, qui est incurvée suivant un rayon de courbure tel que le bord du couvercle peut être enclenché rigidement, et une seconde surface incurvée sur sa portion supérieure, qui est incurvée suivant un rayon de courbure tel qu'une garniture entre le couvercle et le récipient peut être prise étroitement, caractérisé en ce que la partie de col (4) présente une surface intérieure qui fait saillie vers l'intérieur de la lèvre (3) et du corps (2) du récipient, et la lèvre (3) fait saillie obliquement, dans une direction vers l'extérieur et vers le haut, à partir de la partie de col (4) en saillie vers l'intérieur.

2. Récipient en forme de bouteille moulé par soufflage selon la revendication 1, caractérisé en ce que la surface intérieure de la partie de col (4) est légèrement inclinée vers le haut et vers l'intérieur à partir de son bord inférieur.

3. Récipient en forme de bouteille moulé par soufflage selon la revendication 1 ou la revendication 2, caractérisé en ce qu'un évidement sous la forme d'une gorge périphérique (6) est prévu sur la surface extérieure du récipient (1), à la jonction entre la partie de col (4) et le corps (2) du récipient.

FIG. 1

FIG. 2